(19) **Europäisches Patentamt**

**European Patent Office**

**Office européen des brevets**

(11) **EP 0 784 000 B1**

(12) **EUROPÄISCHE PATENTSCHRIFT**

(45) Veröffentlichungstag und Bekanntmachung des Hinweises auf die Patenterteilung:
**13.09.2000 Patentblatt 2000/37**

(51) Int Cl.[7]: **B60T 7/08**, F16D 65/54

(21) Anmeldenummer: **96111922.9**

(22) Anmeldetag: **24.07.1996**

(54) **Automatischer Spielausgleich bei seilzugbetätigten Feststellbremsen von insbesondere Kraftfahrzeugen**

Automatic play compensation in cable actuated parking brakes especially of motor vehicles

Rattrapage automatique de jeu aux freins de stationnement commandés par câble, notamment des véhicules automobiles

(84) Benannte Vertragsstaaten:
**ES FR GB IT**

(30) Priorität: **16.09.1995 DE 19534438**

(43) Veröffentlichungstag der Anmeldung:
**16.07.1997 Patentblatt 1997/29**

(73) Patentinhaber: **DaimlerChrysler AG**
**70567 Stuttgart (DE)**

(72) Erfinder:
• **Koch, Norbert**
**73733 Esslingen (DE)**
• **Böhm, Kurt**
**73770 Denkendorf (DE)**
• **Schefcsik, Nikolaus**
**71409 Schwaikheim (DE)**
• **Eipper, Jürgen**
**71394 Kernen (DE)**

(56) Entgegenhaltungen:
WO-A-92/08628          WO-A-93/19958
US-A- 2 670 058        US-A- 2 871 713
US-A- 2 981 379

**Beschreibung**

Die Erfindung betrifft eine Einrichtung zum automatischen Spielausgleich bei seilzugbetätigten Feststellbremsen nach dem Oberbegriff des Patentanspruchs 1.

Eine solche Einrichtung ist bekannt aus WO 93 19958A und WO 92 08628A. Bei jenen Einrichtungen besteht das Spannelement jeweils aus einer beweglichen, gegenüber dem Seilzug in Spannrichtung kraftschlüssig verkantbaren Spannplatte, durch die der Seilzug gespannt werden kann. Unabhängig von dieser Spannplatte greift an dem Seilzug jeweils ein Klemmhebel an, dessen Klemmwirkung direkt durch den Bremsbetätigungshebel aktiviert bzw. deaktiviert wird. Aufbau und Wirkung des dortigen Klemmhebels sind für sich genommen zusätzlich bekannt aus US 2,670,058 und US 2,981,379.

Hiervon ausgehend beschäftigt sich die Erfindung mit dem Problem, eine gattungsgemäße Einrichtung mit konstruktiv möglichst einfachen Mitteln und funktionell hoher Sicherheit zu schaffen.

Eine Lösung hierfür zeigt eine Ausführung eines gattungsgemäßen Spielausgleiches mit einem Spannelement nach den kennzeichnenden Merkmalen des Patentanspruchs 1 auf.

Die Erfindung beruht auf dem Gedanken, den Lagerbock als Bestandteil des Spannelementes direkt von dem Bremsbetätigungselement in Spannrichtung des Seilzuges bewegbar zu gestalten. Hierdurch soll das Spannen des Seilzuges durch eine entsprechende Bewegung des Lagerbockes auf möglichst einfache Weise erreicht werden können. Die für den Spielausgleich notwendigen Fixiermittel sind auf einfache Weise ausschließlich innerhalb des Lagerbockes gelagert.

Zweckmäßige Ausgestaltungen der Erfindung sind Gegenstand der Unteransprüche.

Ein Ausführungsbeispiel der Erfindung, anhand dessen die erfindungsgemäße Lehre auch noch physikalisch näher erläutert werden wird, ist in der Zeichnung dargestellt.

Es zeigen

Fig. 1   einen Schnitt durch ein spielausgleichendes Spannelement mit angedeutetem Bremsbetätigungselement,

Fig. 2   eine Draufsicht auf das Spannelement,

Fig. 3   einen Schnitt durch das Spannelement mit dem Seilzugende in einer in Spannrichtung maximal verstellten Position,

Fig. 4   einen Ausschnitt aus einer Ansicht auf ein profiliertes Seilzugende mit einer Lagerung innerhalb eines Klemmhebels des Spannelementes in einer ersten Ausführung,

Fig. 5   einen Ausschnitt aus einer Ansicht auf ein profiliertes Seilzugende mit einer Lagerung innerhalb eines Klemmhebels des Spannelementes in einer zweiten Ausführung.

Das erfindungsgemäße Spannelement 1 verbindet das Ende eines Seilzuges 2 mit einem Bremsbetätigungselement 3.

Das Bremsbetätigungselement 3 ist ein in einer ortsfesten Achse 4 drehbar gelagerter von Hand betätigbarer Hebel. Zum Anziehen der Feststellbremse wird das Bremsbetätigungselement 3 in Richtung des Pfeiles A geschwenkt.

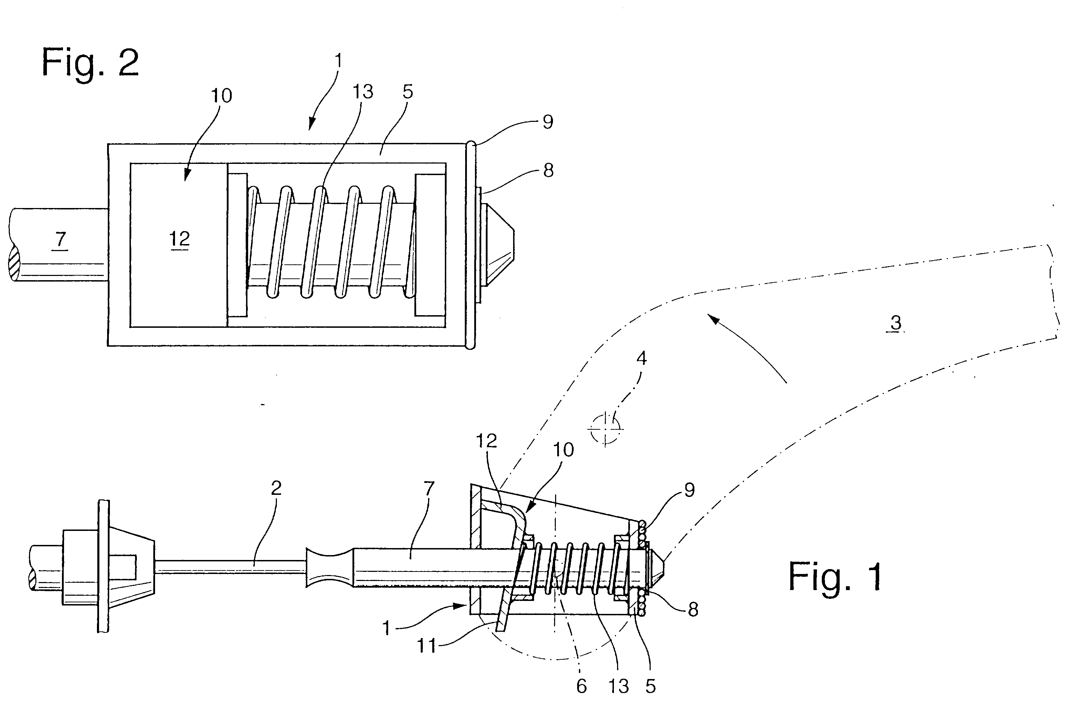

Im Bereich des von der Achse 4 sich erstreckenden nahen Ende des Bremsbetätigungshebels 3 ist an diesem ein Lagerbock 5 drehbar angelenkt. Dieser Lagerbock 5 bildet das Lager des Spannelementes 1 für das Ende des Seilzuges 2. Die Achse, in der der Lagerbock 5 an dem kurzen Ende des Bremsbetätigungshebels 3 gelagert ist, ist in Fig. 1 gestrichelt angedeutet und mit 6 bezeichnet.

Das eigentliche Ende des Seilzuges 2 bildet ein Klemmstab 7, der in Öffnungen des Lagerbocks 5 verschiebbar gelagert ist. An dem durch den Lagerbock 5 hindurchragenden Ende des Klemmstabes 7 ist dieser mit einem Anschlag 8 beispielsweise in der Form eines Sprengringes versehen. Zwischen diesem Anschlag 8 und dem Lagerbock 5 ist eine Spannfeder 9 eingespannt. Um mit einer möglichst geringen axialen Länge dieser Spannfeder 9 auskommen zu können, ist diese konisch ausgebildet, so daß die Federwindungen in voll gespannter Lage praktisch in einer gemeinsamen in Fig. 1 dargestellten Ebene liegen.

Bei inaktiver Bremse, das heißt bei einem Zustand, in dem das Bremsbetätigungselement in seiner dem Pfeil A entgegengerichteten Endstellung ruht, hält die Spannfeder 9 den Seilzug 2 über den Klemmstab 7 in gespannter Stellung.

Ein innerhalb des Lagerbocks 5 gelagerter Klemmhebel 10 sorgt dafür, daß bei einem Aktivieren der Bremse durch ein Schwenken des Bremsbetätigungselementes 3 in Richtung des Pfeiles A der Klemmstab 7 innerhalb des Lagerbocks 5 in seiner durch die Spannfeder 9 gespannten Lage fixiert bleibt. Diese Wirkung erzielt der Klemmhebel 10 dadurch, daß er sich unter Abstützung an dem Lagerbock 5 auf dem Klemmstab 7 rutschfest verkantet. Der Klemmhebel 10 besitzt hierfür eine Öffnung, durch die er auf den Klemmstab 7 aufgeschoben ist.

Geführt ist der Klemmhebel 10 ausschließlich durch seine Anlage an dem Klemmstab 7. An dem Lagerbock 5 stützt sich der in Form eines Winkels ausgebildete Klemmhebel 10 lediglich zur Erzeugung eines die gewünschte Verkantung auf dem Klemmstab 7 bewirkenden Drehmomentes ab.

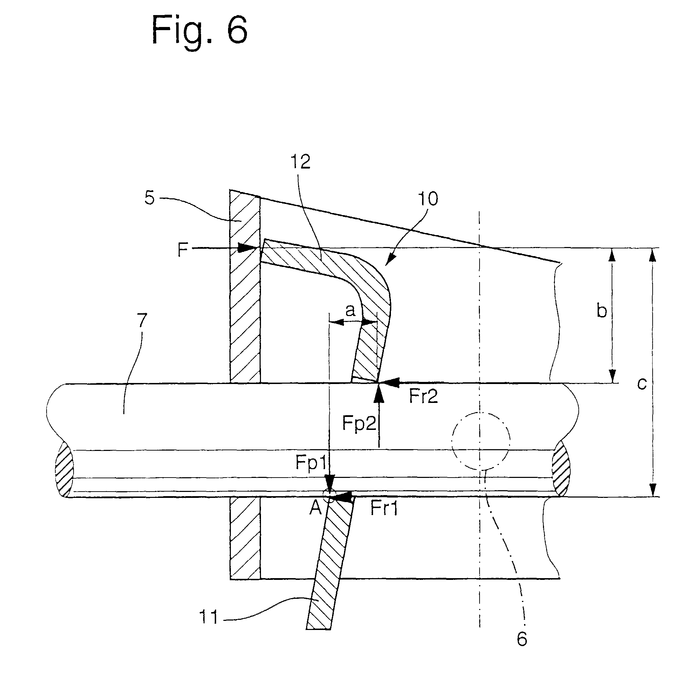

Physikalisch läßt sich die Klemmwirkung des Klemmhebels 10 wie folgt anhand einer Kräfte-Darstellung in Fig. 6 erklären.

Mit F ist die von dem Seilzug 2 bei aktivierter Bremse zu übertragende Kraft bezeichnet. In dem in der Form eines Winkels ausgebildeten Klemmhebel 10 mit einem ersten Schenkel 11 und einem zweiten Schenkel 12 wird die Kraft F des Seilzuges 2 in den an dem Klemmstab 7 angreifenden Anlageflächen durch dort erzeugte Gegenkräfte im Sinne eines Festklemmens kompensiert.

Bezüglich der in der Fig. 6 eingetragenen Kräfte sowie der Momente um den Punkt A ergeben sich bei Gleichgewichtsbetrachtung folgende Bedingungen und daraus abgeleitete Ergebnisse.

(1) aus $\Sigma$ Fx = 0 folgt: F = $Fr_1$ + $Fr_2$,
(2) aus $\Sigma$ Fy = 0 folgt: $Fp_1$ = $Fp_2$ (= Fp)
(3) aus $\Sigma$ $M_A$ = 0 folgt: Fp = F x (b + c) / (2 x a), wobei a, b und c die in Fig. 6 eingetragenen Strecken sind.
(4) Aus dem Coulombschen Reibungsgesetz folgt: Fr = Fp x $\mu$.

Aus den vorgenannten Bedingungen ergibt sich an dem Schiebesitz zwischen Klemmstab 7 und Klemmhebel 10 eine Selbsthemmung bei

$$\mu > a / (b + c).$$

Bei beispielsweise einer Materialpaarung von Stahl/Stahl für Klemmstab 7 und Klemmhebel 10 beträgt der Reibungskoeffizient bei vorhandener Schmierung $\mu$ = 0,1.

Im vorliegenden Fall errechnet sich der für einen Selbsthemmungswert maßgebliche Ausdruck wie folgt:

$$a / (b + c) = 2,5 \text{ mm} / (10 \text{ mm} + 18 \text{ mm}) = 0,089.$$

Dies bedeutet, daß bei einer Stahl/Stahl-Materialpaarung mit einem Reibungskoeffizienten von $\mu$ = 0,1 die erforderliche Selbsthemmung gegeben ist.

Damit der Klemmhebel 10 jeweils in einer dichten Anlage an den Klemmstab 7 in einer Position gehalten wird, in der er die bei aktivierter Bremse auftretende Kraft des Seilzuges 2 aufzunehmen hat, wird er durch eine Klemmfeder 13 auch bei deaktivierter Bremse gehalten. Die Kraft der zweiten Druckfeder 13 ist erheblich geringer als die Kraft der ersten Druckfeder 9. Dadurch ist Spannfeder 9 bei deaktivierter Bremse in der Lage, den Seilzug 2 über den Klemmstab 7 zu spannen und dabei den Klemmstab 7 bei einem erforderlichen Zugseil 2-Längenausgleich durch die Öffnung des Klemmstabes 7 hindurch zu ziehen. Bei dem Hindurchziehen des Klemmstabes 7 durch den Klemmhebel 10 wird letzterer gegen die Kraft der Klemmfeder 13 seiner Klemmkraft kurzfristig enthoben. Nach erfolgtem Zugseil-Längenausgleich nimmt der Klemmhebel 10 unter der Kraft der zweiten Druckfeder 13 erneut seine Klemmposition ein, die er bei aktivierter Bremse besitzen und halten muß.

Der Klemmstab 7 ist zweckmäßigerweise als Vierkantstab ausgebildet, um möglichst große Klemmflächen in Klemmrichtung zu besitzen.

Die Klemmflächen des Klemmstabes können zur Erhöhung eines Reibschlusses profiliert sein und hierfür beispielsweise ein Sägezahnprofil aufweisen.

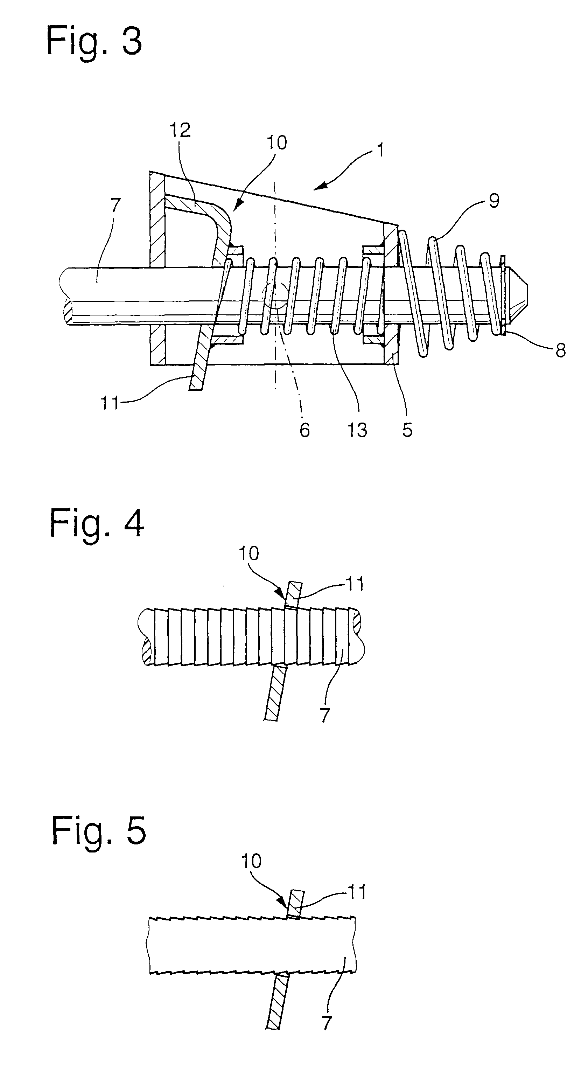

Ein solches Sägezahnprofil ist für einen Klemmstab 7 in der Ausführung als Rundstab in Fig. 4 dargestellt.

Die Fig. 5 zeigt dagegen einen Klemmstab 7 als Vierkantstab mit lediglich sägezahnmäßig profilierten Klemmflächen. Die Sägezahnausrichtung ist dabei an den entgegengesetzten Klemmflächen entgegengerichtet.

## Patentansprüche

1. Einrichtung zum automatischen Spielausgleich bei seilzugbetätigten Feststellbremsen von insbesondere Kraftfahrzeugen durch ein zwischen ein Betätigungselement (3) und den Seilzug eingeschaltetes Spannelement mit einem schwenkbaren, federbelasteten Klemmhebel (10), der das Ende eines über eine sich an einem Lagerbock (5) abstützende Spannfeder (9) gespannten Seilzuges (2) bei aktivierter Bremse fixiert hält und bei deaktivierter Bremse der Spannwirkung der Spannfeder (9) aussetzt, **dadurch gekennzeichnet,** daß der Lagerbock (5) in Spannrichtung des Seilzuges (2) von dem Bremsbetätigungselement (3) bewegbar ist und daß der Klemmhebel (10) ausschließlich in diesem Lagerbock (5) gelagert ist.

2. Einrichtung nach Anspruch 1, **dadurch gekennzeichnet,** daß das Ende des Seilzuges (2) in einem Schiebesitz durch den Klemmhebel (10) hindurchgeführt ist.

3. Einrichtung nach Anspruch 2, **dadurch gekennzeichnet,** daß das in dem Klemmhebel (10) zu liegen kommende Ende des Seilzuges (2) als Klemmstab (7) ausgebildet ist.

4. Einrichtung nach Anspruch 3, **dadurch gekennzeichnet,** daß der Klemmstab (7) als Vierkantstab ausgebildet ist.

5. Einrichtung nach Anspruch 3 oder 4, **dadurch gekennzeichnet,** daß der Klemmstab (7) an seinen Klemmflächen mit einem bei aktivierter Bremse verschiebesperrend wirkenden Profil versehen ist.

**6.** Einrichtung nach Anspruch 5,
**dadurch gekennzeichnet,**
daß das Profil ein Sägezahnprofil ist.

**7.** Einrichtung nach Anspruch 6,
**dadurch gekennzeichnet,**
daß bei einer Ausbildung des Klemmstabes (7) als Vierkantstab die Sägezahnprofile auf den gegenüberliegenden Klemmflächen entgegengerichtet sind.

**8.** Einrichtung nach einem der vorhergehenden Ansprüche,
**dadurch gekennzeichnet,**
daß das Bremsbetätigungselement ein Schwenkhebel und der Lagerbock (5) in diesem drehbar gelagert ist.

**Claims**

**1.** Device for automatically taking up the slack in cable-actuated hand-brakes, in particular those of motor vehicles, by means of a tensioning element interposed between an actuation element (3) and the cable, which comprises a tilting, spring-loaded clamping lever (10) which holds fixed the end of a cable (2) tensioned by a tensioning spring (9) supported against a mounting bracket (5) when the brake is actuated, and which, when the brake is not actuated, prevents the tensioning action of the tensioning spring,
**characterised in that**
the mounting bracket (5) can be moved by the brake actuation element (3) in the tensioning direction of the cable (2), and the clamping lever (10) is fitted exclusively in this mounting bracket (5).

**2.** Device according to Claim 1,
**characterised in that**
the end of the cable (2) is passed in sliding contact through the clamping lever (10).

**3.** Device according to Claim 2,
**characterised in that**
the end of the cable (2) that is positioned in the clamping lever (10) is formed as a clamping rod (7).

**4.** Device according to Claim 3,
**characterised in that**
the clamping rod (7) is formed as a rectangular bar.

**5.** Device according to Claims 3 or 4,
**characterised in that**
on its clamping surfaces the clamping rod (7) is provided with a profile that will prevent sliding when the brake is actuated.

**6.** Device according to Claim 5,
**characterised in that**
the profile is a saw-tooth profile.

**7.** Device according to Claim 6,
**characterised in that**
when the clamping rod (7) is formed as a rectangular bar, the saw-tooth profiles are directed away from the opposite clamping surfaces.

**8.** Device according to any of the preceding claims,
**characterised in that**
the brake actuation element is a swivelling lever and the mounting bracket (5) is fitted and can rotate therein.

**Revendications**

**1.** Dispositif de compensation automatique du jeu pour des freins de stationnement actionnés par câble de traction en particulier de véhicules automobiles, au moyen d'un élément tendeur mis en service entre un élément d'actionnement (3) et le câble de traction, ayant un levier de serrage (10) sollicité par un ressort, susceptible de pivoter, qui, lorsque le frein est activé, maintient fixée l'extrémité d'un câble de traction (2) tendu par l'intermédiaire d'un ressort de tension (9) prenant appui sur un bloc palier (5) et la relâche de l'effet de tension du ressort de tension (9) lorsque le frein est désactivé, caractérisé en ce que le bloc palier (5) est déplacable, dans la direction de mise sous tension du câble de traction (2) par l'élément d'actionnement de frein (3), et en ce que le levier de serrage (3) est monté exclusivement dans ce bloc palier (5).

**2.** Dispositif selon la revendication 1, caractérisé en ce que l'extrémité du câble de traction (2) est passée, de façon guidée, sous un ajustement coulissant, à travers le levier de serrage (10).

**3.** Dispositif selon la revendication 2, caractérisé en ce que l'extrémité, venant se placer dans le levier de serrage (10), du câble de traction (2) est réalisée sous la forme d'une barre de serrage (7).

**4.** Dispositif selon la revendication 3, caractérisé en ce que la barre de serrage (7) est réalisée sous la forme d'une barre de type quatre pans.

**5.** Dispositif selon la revendication 3 ou 4, caractérisé en ce que la barre de serrage (7) est dotée sur ses surfaces de serrage d'un profil agissant en bloquant tout déplacement lorsque le frein est activé.

**6.** Dispositif selon la revendication 5, caractérisé en ce que le profil est un profil en dent de scie.

**7.** Dispositif selon la revendication 6, caractérisé en ce que, dans le cas de réalisation de la barre de serrage (7) sous la forme d'une barre à quatre pans, les profils en dent de scie aménagés sur les surfaces de serrage confrontées sont orientés les uns vers les autres.

**8.** Dispositif selon l'une des revendication précédentes, caractérisé en ce que l'élément d'actionnement de frein est un levier pivotant et le bloc palier (5) est monté de façon à pouvoir pivoter dans celui-ci.

Fig. 2

Fig. 1

EP 0 784 000 B1

Fig. 3

Fig. 4

Fig. 5

# Fig. 6